# EUROPEAN PATENT SPECIFICATION

(11) **EP 1 033 876 B1**
(45) Date of publication and mention of the grant of the patent: **28.09.2011**
(21) Application number: 00103476.8
(22) Date of filing: 01.03.2000
(51) Int. Cl.: H04N 7/14, H04M 1/725

(54) **Radio mobile terminal with a mountable and removable camera**
Mobilfunkendgerät mit befestigbarer und entfernbarer Kamera
Terminal de radiotéléphonie avec une caméra montable et amovible

(30) Priority: 01.03.1999 JP 5267299
(43) Date of publication of application: 06.09.2000
(60) Divisional application: 08008577.2
(73) Proprietor: Fujitsu Toshiba Mobile Communications Limited, Nakahara-ku Kawasaki-shi Kanagawa 211-8588 (JP)
(72) Inventor: Ito, Koichi, 1-1 Shibaura 1-chome Minato-ku Tokyo 105 (JP)
(74) Representative: HOFFMANN EITLE

(56) References cited:
- EP-A- 0 975 132
- EP-A1- 0 348 623
- EP-A1- 0 930 768
- EP-A1- 0 975 132
- EP-A2- 0 734 162
- EP-A2- 0 858 214
- DE-A- 19 815 604
- JP-A- 9 327 007
- JP-A- 10 013 561
- US-A- 5 893 037

## Description

The present invention relates to a radio mobile terminal.

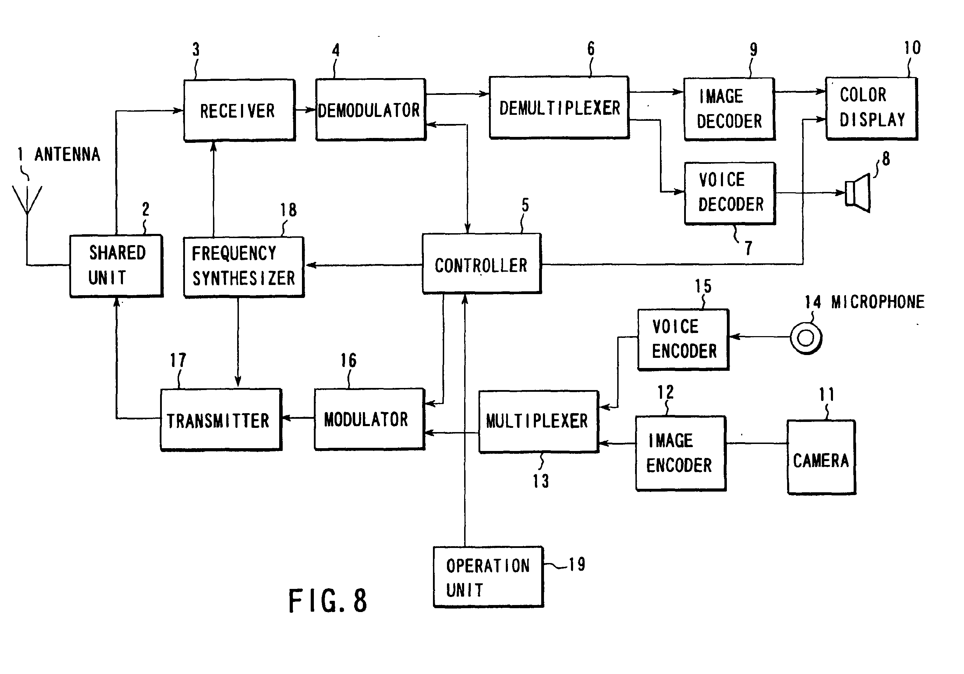

Available radio mobile terminals include a radio mobile videophone terminal that can send and receive motion pictures as well as voices by attaching a camera to a commercially available mobile telephone. This type of videophone terminals employs a configuration as shown in FIG. 8 for communicating data including voices and images with a remote terminal via a base station.

In FIG. 8, a high-frequency signal received at an antenna 1 is supplied to a receiver 3 via a shared unit 2. The supplied signal is frequency-converted to a low-frequency signal (baseband signal) based on a local oscillation signal from a frequency synthesizer 18, and then is demodulated in a demodulator 4. The demodulated signal is transferred to a controller 5 that reads a control signal therefrom. The demodulated signal is also supplied to a demultiplexer 6. The multiplexed signal is separated into a voice signal and an image signal.

A voice signal is decoded in a voice decoder 7 and is output from a speaker 8 as a voice. An image signal is decoded in an image decoder 9 and is displayed on an color display 10 functioning as a display unit.

A camera 11 captures a subject to generate an image signal. The generated image signal is encoded in an image encoder 12, and then is supplied to a multiplexer 13. A voice signal entered from a microphone 14 is encoded in a voice encoder 15, and then is supplied to a multiplexer 13. The multiplexer 13 multiplexes encoded image and voice signals. A multiplexed signal is modulated in a modulator 16, and then is sent to a base station via a transmitter 17, the shared unit 2, and the antenna 1. The frequency synthesizer 18 generates frequencies needed for radio communication. An operation unit 19 is used for various key operations.

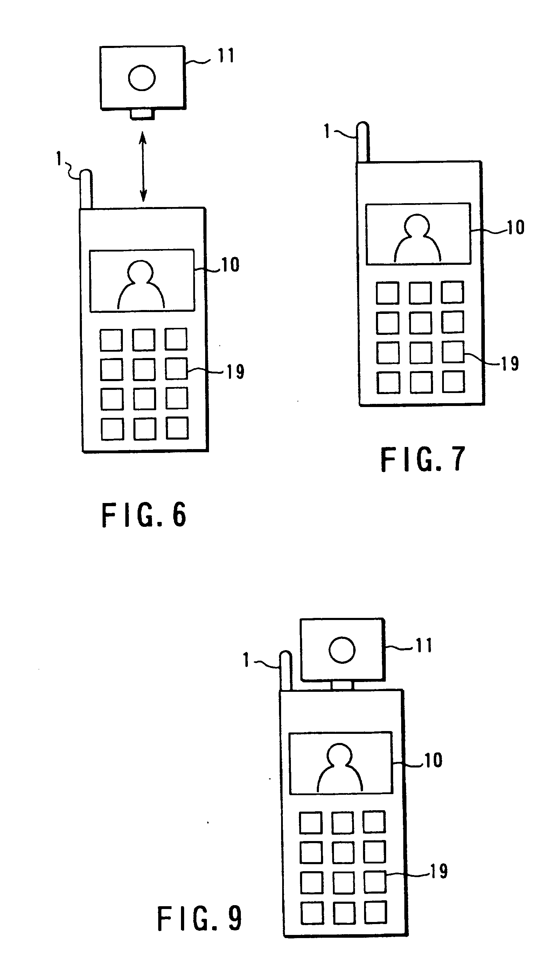

FIG. 9 shows an outline of the above-mentioned videophone terminal. Its body is provided with the color display 10 and the operation unit 19. The upper part of the body is provided with the antenna 1 and the camera 11.

A great majority of mobile telephone users owns a small apparatus capable of voice and e-mail communication. Contrastedly, a videophone terminal uses a relatively large camera for providing videophone capabilities. For example, a videophone terminal equipped with a camera as shown in FIG. 9 has a volume of approximately 200 ml. Contrary to an ordinary mobile telephone, there has a problem of inconvenience that such an apparatus is too large and heavy to carry say in a pocket of user's clothes during an out-of-service state of the apparatus. In addition, the camera's movable parts may be damaged.

US 5,940,119, which is a family member of EP-A-0 734 162, discloses a communications terminal, including a video telephone, for transmitting and receiving video and audio. The terminal includes video recording apparatus and video reproduction apparatus with the video recording apparatus being switchable into an "off" mode by operation of a flap. In order to use the transmission capacity of the communications terminal even when the flap is closed, an image which already exists in a video memory is transmitted. A changeover is automatically made to the video memory by operation of the flap. JP 10-013561 discloses a handheld telephone set with an adaptor for connecting a camera. It detects whether a camera is connected and performs image transmission in accordance with the detection result.

The object of the present invention is to provide a radio mobile terminal that is conveniently transportable during an out-of-service state and can be easily used as a videophone during operation.

According to a first aspect of the invention, there is provided a radio mobile terminal as set out in Claim 1.

According to a second aspect of the invention, there is provided a radio mobile terminal as set out in Claim 5.

Embodiments of the invention can be more fully understood from the following detailed description when taken in conjunction with the accompanying drawings, in which:
FIG. 1 is a block diagram showing a configuration of a radio mobile terminal according to the first embodiment of the present invention.
FIG. 2 is an operation flowchart for outgoing and incoming calls according to the first embodiment of the present invention.
FIG. 3 is a block diagram showing a configuration of a radio mobile terminal according to the second embodiment of the present invention.
FIG. 4 is an operation flowchart for outgoing and incoming calls according to the second embodiment of the present invention.
FIG. 5 is a block diagram showing a configuration of a radio mobile terminal according to the third embodiment of the present invention.
FIG. 6 is an external view (part 1 of 2) of a radio mobile terminal according to the third embodiment, showing that the camera can be mounted or detached.
FIG. 7 is an external view (part 2 of 2) of a radio mobile terminal according to the third embodiment, showing that no camera is provided.
FIG. 8 is a block diagram that shows a configuration of a conventional radio mobile terminal.
FIG. 9 is an external view of a conventional radio mobile terminal.

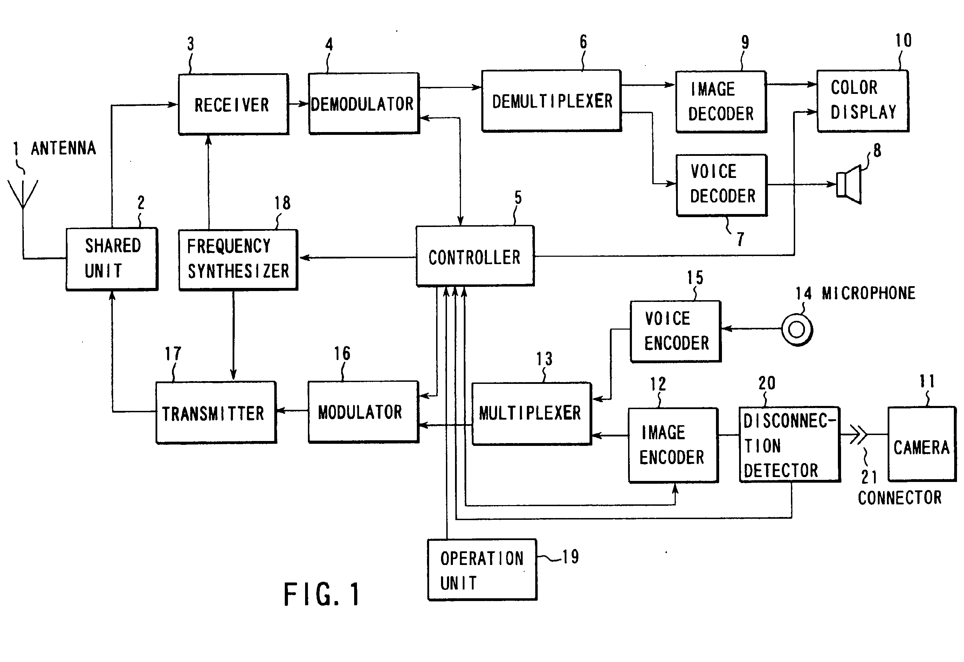

Embodiments of the present invention will be described in detail, with reference to the accompanying drawings. FIG. 1 is a block diagram showing a configuration of a radio mobile videophone terminal (simply called a radio mobile terminal hereafter) according to the first embodiment of the present invention. Same components in FIGS. 1 and 8 are assigned same numbers. Different components are chiefly described here. In FIG. 1, a camera 11 for this embodiment can be mounted and detached via a connector 21 as a connection unit. A disconnection detector 20 detects whether the camera 11 is detached or mounted, and then issues a detection signal to a controller 5. FIG. 6 shows the camera 11 can be freely detached or mounted on the radio mobile terminal.

When reading a detection signal indicating that the camera 11 is detached, the controller 5 operates assuming that the camera 11 is not mounted. When reading a detection signal indicating that the camera 11 is mounted, the controller operates assuming that the camera 11 is mounted.

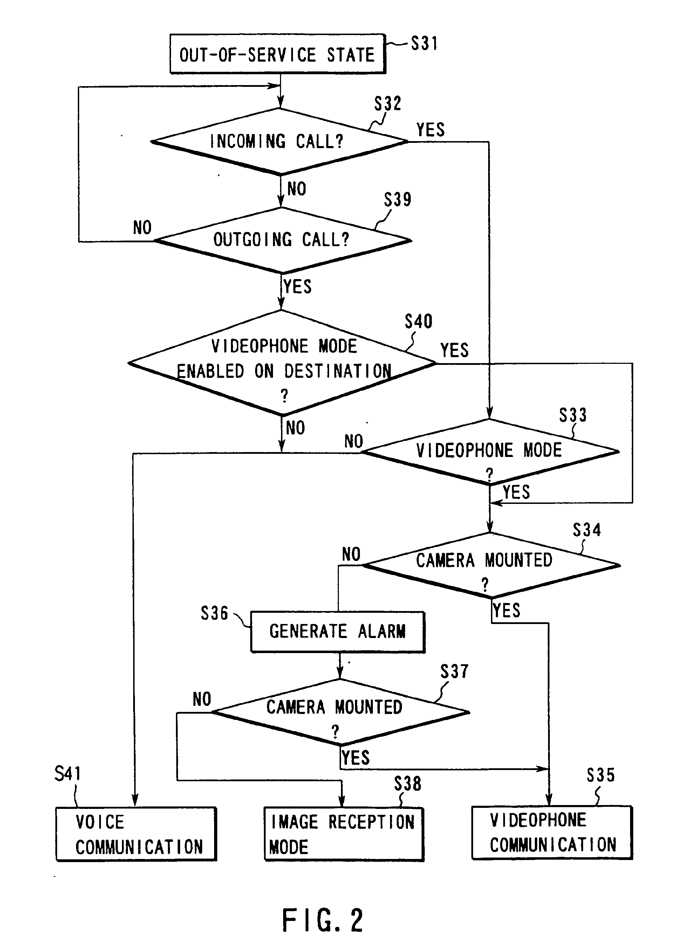

FIG. 2 is an operation flowchart for outgoing and incoming calls according to the first embodiment of the present invention. While in an out-of-service state (step S31), the controller 5 checks if there is an incoming call from a destination terminal (step S32). When step S32 results in YES, the controller 5 uses the received signal to determine if the call has terminated in a videophone mode (step S33). When step S33 results in YES, the controller checks if the camera 11 is mounted according to a signal from the disconnection detector 20 (step S34). When step S34 results in YES, the videophone mode takes effect immediately, enabling videophone communication (step S35). When step S34 results in NO, control is passed to step S36 to generate an alarm and enter a wait state for a specified time. After this wait time, the controller rechecks if the camera 11 is mounted according to a signal from the disconnection detector 20 (step S37). When step S37 results in YES, control is passed to step 35 to enable the videophone mode. When step S37 results in NO, the controller enters an image reception mode (step S38) that just receives video images from the destination terminal for communication.

When step S33 results in NO, the controller proceeds to step S41 to enter a voice mode.

When step S32 results in NO, the controller proceeds to step 39 to check if an outgoing call is generated. When step S39 results in NO, control returns to step S32. When step S39 results in YES to indicate call origination, the controller 5 checks if the destination terminal enters the videophone mode according to a signal from a base station (step S40). When step 40 results in YES, the controller follows the same procedure thereafter as for the call termination depending on whether the camera 11 is mounted (step S34). When step S40 results in NO, control is passed to step S41 to enable the voice mode.

As mentioned above, this embodiment allows the camera 11 to be mounted or detached. The camera can be detached for improved portability when it is not needed. When an incoming call is received from the destination terminal, the radio mobile terminal checks if the videophone mode takes effect. When the videophone mode takes effect, it is possible to select whether to perform videophone communication with the camera 11 mounted or to just receive images from the destination depending on needs. When a call is to be originated from the own radio mobile terminal, it is possible to first check if the destination terminal is in the videophone mode. Only when the destination terminal is in the videophone mode, videophone communication is available with the own camera 11 mounted.

Accordingly, the above-mentioned first embodiment can provide a radio mobile terminal that is conveniently transported during an out-of-service state and is easily operated as a videophone when needed.

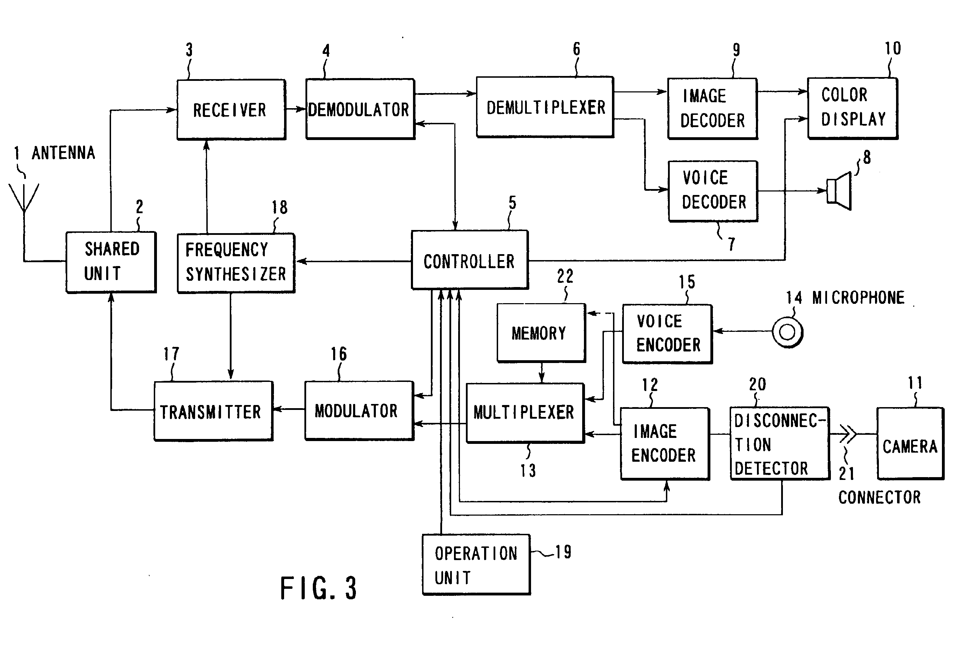

FIG. 3 is a block diagram showing a configuration of a radio mobile terminal according to the second embodiment of the present invention. Compared to the configuration in FIG. 1, memory 22 as an image storage is added to FIG. 3. This embodiment uses a connector 21 to import image data captured by the camera 11 during an out-of-service state. The imported image data is encoded in a image encoder 12 and is stored as self-portrait data in the memory 22.

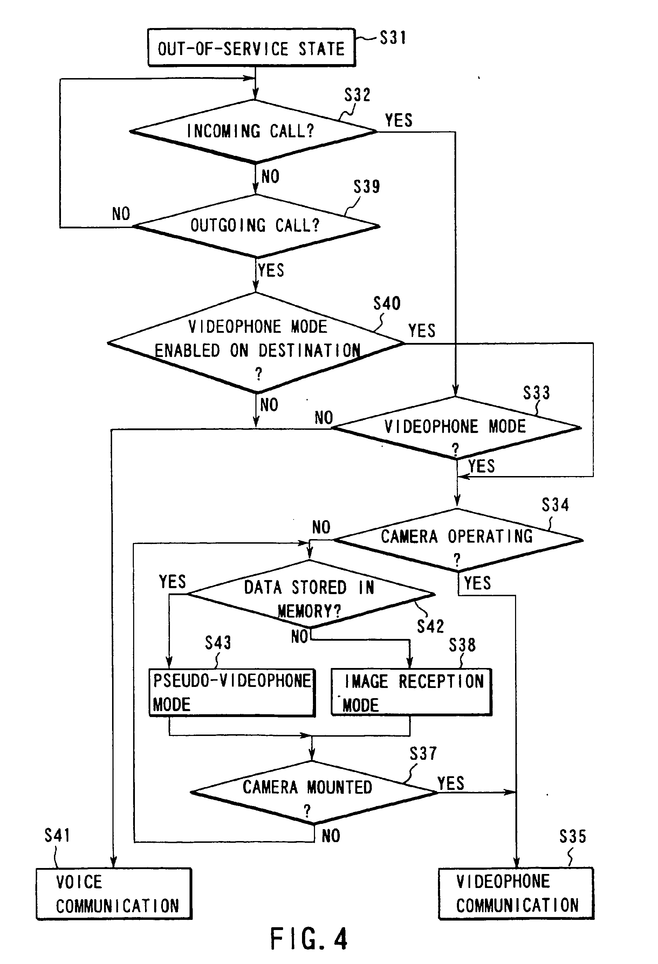

FIG. 4 is an operation flowchart for outgoing and incoming calls according to the second embodiment of the present invention. Same flowchart steps in FIGS. 2 and 4 are assigned same step numbers. In this embodiment, an incoming call is confirmed at step S32 for example. Under this condition, when the videophone mode is confirmed at step S33, the controller 5 checks if the camera 11 is active at next step S34. Inactive states of the camera 11 include cases where the camera 11 is not mounted or where the camera 11 is mounted but does not operate. When step S34 results in NO, the controller proceeds to step S42 to check if self-portrait data is stored in the memory 22. When step S42 results in YES, the controller transfers the encoded self-portrait data to a multiplexer 13 to enable a pseudo-videophone mode (step S43). Data in the memory 22 can be any character instead of a self-portrait.

In this case, although the realtime image data is sent from the destination terminal and displayed at the color display 10, the self-portrait data which is sent to the destination terminal is the one which is stored in advance in the memory 22, rather than the realtime image (in this case, voice data is sent to the destination terminal realtime).

When step S42 results in NO, there is no image data to send, automatically causing the image reception mode (step S38). After step S43 or S38, the controller rechecks if the camera 11 is mounted (step S37). When step S37 results in YES, the videophone mode is enabled. When step S37 results in NO, the voice mode is enabled.

In the above-mentioned second embodiment, image data stored in the memory 22 is transmitted when the camera 11 is not mounted, or is mounted but does not operate in the videophone mode. It is possible to provide pseudo-videophone communication without transmitting a realtime image. This embodiment provides such an advantage that a user can set to the terminal whether the stored image data should be sent or not instead of a realtime image, prior to or during the communication. In addition, this embodiment includes effects of the first embodiment such as improved portability during an out-of-service state and easy operability as a videophone on demand. Since image data is stored in an encoded format, a required amount of memory can be decreased. This provides an advantage of eliminating a need to encode images at the time of videophone communication.

As a variant example of the second embodiment, it is possible to decrease an amount of memory required just by storing image data for a short time (say approximately 10 seconds) in the memory 22. By repeating this operation, a user can send entire data to the destination terminal.

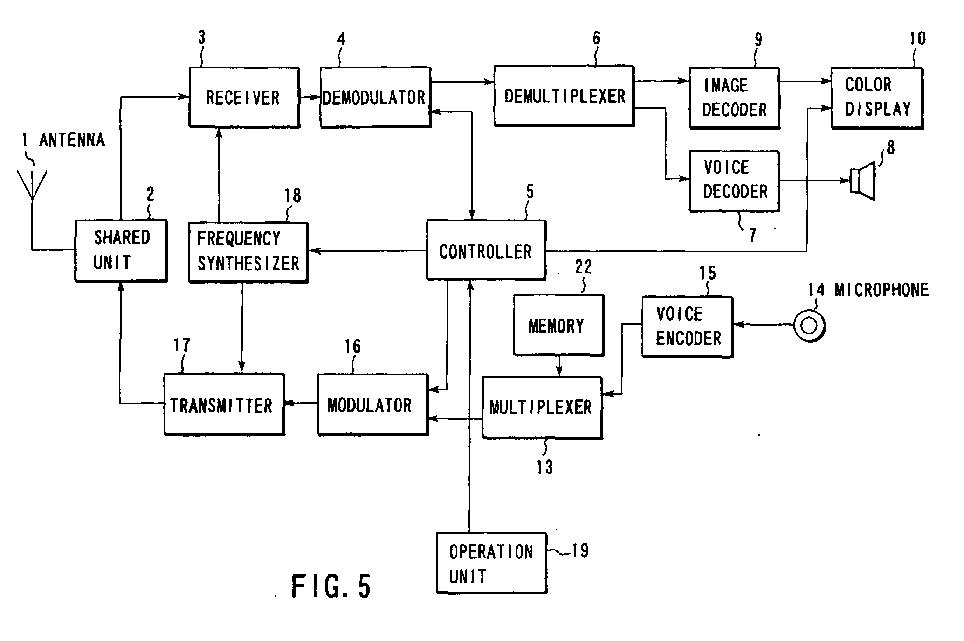

FIG. 5 is a block diagram showing a configuration of a radio mobile terminal according to the third embodiment of the present invention. The configuration in FIG. 5 is void of the image encoder 12, the disconnection detector 20, the connector 21, and the camera 11 in the configuration for the second embodiment in FIG. 3. The configuration in FIG. 5 has no camera as shown in FIG. 7.

In this embodiment, self-portrait data captured by say a digital camera is encoded on a personal computer. The encoded data is imported into the radio mobile terminal and is stored in the memory 22. It is also possible to use the memory 22 for storing image data transmitted from a networked server connected to a base station or from other radio mobile terminals. Pseudo-videophone communication with the destination terminal is available by sending image data stored in the memory 22.

In addition to effects of the second embodiment, the third embodiment eliminates the camera and necessary components such as the image encoder 12, the disconnection detector 20, and the connector 21. The radio mobile terminal can be more compact and lightweight. Another advantage is more improved operability because a user need not mount or detach the camera.

For the second and third embodiments, it is possible to provide a voice transmission mode and a voice reception mode. The voice transmission mode allows the radio mobile terminal to transmit voice data to the destination terminal. The voice reception mode allows the radio mobile terminal to receive voice data from the destination terminal. In the voice transmission mode, the radio mobile terminal can send to the destination terminal an image indicating that she or he is speaking. In the voice reception mode, the radio mobile terminal can send to the destination terminal an image indicating that she or he is not speaking. This can eliminate unnaturalness during videophone communication.

## Claims

1. A radio mobile terminal capable of communicating data including voices and images with a destination terminal, the radio mobile terminal comprising:
a storage unit (22) arranged to store image data for transmission to the destination terminal, wherein the image data is stored in an encoded format in the storage unlit (22);
a connection unit (21) connectable to a camera (11) ;
a disconnection detector (20) arranged to detect whether the camera (11) is detached or mounted via the connection unit (21), and issue a detection signal to a controller (5) ; and
a transmitter (17) arranged to transmit image data stored in the storage unit (22) to the destination terminal;
wherein the controller (5) is arranged to check if a videophone mode of the radio mobile terminal is in effect when an incoming call is received from the destination terminal;
the controller (5) is arranged to check if the camera (11) is active;
inactive states of the camera include cases where the camera is not mounted or where the camera is mounted but does not operate; and
the radio mobile terminal is controllable to provide voice communication services when not in the videophone mode, provide videophone communication services when the camera (11) is active in the videophone mode of the radio mobile terminal, or provide pseudo-videophone communication services by transmitting, by the transmitter, image data stored in the storage unit (22) to the destination terminal when the camera (11) is inactive in the videophone mode.

2. A radio mobile terminal according to claim 1, wherein the storage unit (22) is arranged to store image data in a format suitable for transmission to the destination terminal.

3. A radio mobile terminal according to claim 1, **characterized in that** the radio mobile terminal is operable to switch to the videophone communication services from the pseudo-videophone communication services or from the image reception, when the second decision unit (20) detects that the camera (11) is mounted.

4. A radio mobile terminal according to claim 3, **characterized in that** the radio mobile terminal is operable to provide the voice communication services in a voice transmission mode that transmits voice data to the destination terminal and in a voice reception mode that receives voice data from the destination terminal, and wherein first image data indicating that a user of the radio terminal is speaking is arranged to be transmitted to the destination terminal in the voice transmission mode, and second image data indicating that the user is not speaking is arranged to be transmitted to the destination terminal in the voice reception mode.

5. A radio mobile terminal terminal capable of communicating data including voices and images with a destination terminal, the radio mobile terminal comprising:
a storage unit (22) arranged to store image data for transmission to the destination terminal, wherein the image data is stored in an encoded format in the storage unit (22);
a connection unit (21) connectable to a camera (11) ;
a disconnection detector (20) arranged to detect whether the camera (11) is detached or mounted via the connection unit (21), and issue a detection signal to a controller (5) ; and
a transmitter (17) arranged to transmit image data stored in the storage unit (22) to the destination terminal;
wherein the controller (5) is arranged to check if the destination terminal is in the videophone mode when a call is made to the destination terminal;
the controller (5) is arranged to check if the camera (11) is active;
inactive states of the camera include cases where the camera is not mounted or where the camera is mounted but does not operate; and
the radio mobile terminal is controllable to provide voice communication services when the destination terminal is not in the videophone mode, provide videophone communication services when the destination terminal is in the videophone mode and the camera (11) is active, or provide pseudo-videophone communication services by transmitting, by the transmitter, image data stored in the storage unit (22) to the destination terminal when the destination terminal is in the videophone mode and the camera (11) is inactive.

6. A radio mobile terminal according to claim 5, **characterized in that** the radio mobile terminal is operable to switch to the videophone communication services from the pseudo-videophone communication services or from the image reception, when the second decision unit (20) detects that the camera (11) is mounted.

## Patentansprüche

1. Funkmobilendgerät, das in der Lage ist, Daten zu kommunizieren, die Sprachdaten und Bilder umfassen, mit einem Zielendgerät, wobei das Funkmobilendgerät umfasst:
eine Speichereinheit (22), die eingerichtet ist, Bilddaten zum Senden an das Zielendgerät zu speichern, wobei die Bilddaten in einem codierten Format in der Speichereinheit (22) gespeichert sind;
eine Verbindungseinheit (21), die mit einer Kamera (11) verbunden werden kann;
einen Trennungsdetektor (20), der eingerichtet ist, zu detektieren, ob die Kamera (11) abgenommen oder angebracht ist über die Verbindungseinheit (21), und ein Detektionssignal an eine Steuerung (5) auszugeben; und
einen Sender (17), der eingerichtet ist, Bilddaten, die in der Speichereinheit (22) gespeichert sind, an das Zielendgerät zu senden;
wobei die Steuerung (5) eingerichtet ist, zu prüfen, ob ein Videophonemodus des Funkmobilendgeräts wirksam ist, wenn ein eingehender Anruf von dem Zielendgerät empfangen wird;
wobei die Steuerung (5) eingerichtet ist, zu prüfen, ob die Kamera (11) aktiv ist;
wobei inaktive Zustände der Kamera Fälle umfassen, bei denen die Kamera nicht angebracht ist oder bei denen die Kamera angebracht ist aber nicht betrieben wird; und
das Funkmobilendgerät steuerbar ist,
Sprachkommunikationsdienste bereitzustellen, wenn es sich nicht in dem Videophonemodus befindet,
Videophonekommunikationsdienste bereitzustellen, wenn die Kamera (11) aktiv ist in dem Videophonemodus des Funkmobilendgeräts, oder Pseudo-Videophonekommunkationsdienste bereitzustellen, durch ein Senden, durch den Sender, von Bilddaten, die in der Speichereinheit (22) gespeichert sind, an das Zielendgerät, wenn die Kamera (11) inaktiv ist, in dem Videophonemodus.

2. Funkmobilendgerät nach Anspruch 1, wobei die Speichereinheit (22) eingerichtet ist, Bilddaten in einem Format zu speichern, das sich für ein Senden an das Zielendgerät eignet.

3. Funkmobilendgerät nach Anspruch 1, **dadurch gekennzeichnet, dass** das Funkmobilendgerät betreibbar ist, zu den Videophonekommunikationsdiensten von den Pseudo-Videophonekommunikationsdiensten zu wechseln, oder von dem Bildempfang, wenn die zweite Entscheidungseinheit (20) detektiert, dass die Kamera (11) angebracht ist.

4. Funkmobilendgerät nach Anspruch 3, **dadurch gekennzeichnet, dass** das Funkmobilendgerät betreibbar ist, die Sprachkommunikationsdienste in einem Sprachsendemodus bereitzustellen, der Sprachdaten an das Zielendgerät sendet, und in einem Sprachempfangsmodus, der Sprachdaten von dem Zielendgerät empfängt, und wobei erste Bilddaten, die anzeigen, dass ein Benutzer des Funkendgeräts spricht, eingerichtet sind, an das Zielendgerät gesendet zu werden, in dem Sprachsendemodus, und zweite Bilddaten, die anzeigen, dass der Benutzer nicht spricht, eingerichtet sind, an das Zielendgerät in dem Sprachempfangsmodus gesendet zu werden.

5. Funkmobilendgerät, das in der Lage ist, Daten zu kommunizieren, die Sprachdaten und Bilder umfassen, mit einem Zielendgerät, wobei das Funkmobilendgerät umfasst:
eine Speichereinheit (22), die eingerichtet ist, Bilddaten zum Senden an das Zielendgerät zu speichern, wobei die Bilddaten in einem codierten Format in der Speichereinheit (22) gespeichert werden;
eine Verbindungseinheit (21), die mit einer Kamera (11) verbunden werden kann;
einen Trennungsdetektor (20), der eingerichtet ist, zu detektieren, ob die Kamera (11) abgenommen oder angebracht ist über die Verbindungseinheit (21) und ein Detektionssignal an eine Steuerung (5) auszugeben; und
einen Sender (17), der eingerichtet ist, Bilddaten zu senden, die in der Speichereinheit (22) gespeichert sind, an das Zielendgerät;
wobei die Steuerung (5) eingerichtet ist, zu prüfen, ob das Zielendgerät in dem Videophonemodus ist, wenn ein Anruf an das Zielendgerät erfolgt;
die Steuerung (5) eingerichtet ist, zu prüfen, ob die Kamera (11) aktiv ist;
inaktive Zustände der Kamera Fälle umfassen, bei denen die Kamera nicht angebracht ist oder bei denen die Kamera angebracht ist aber nicht betrieben wird; und
das Funkmobilendgerät steuerbar ist,
Sprachkommunikationsdienste bereitzustellen, wenn das Zielendgerät nicht in dem Videophonemodus ist,
Videophonekommunikationsdienste bereitzustellen, wenn das Zielendgerät in dem Videophonemodus ist und die Kamera (11) aktiv ist, oder Pseudo-Videophonekommunikationsdienste bereitzustellen durch ein Senden, durch den Sender, von Bilddaten, die in der Speichereinheit (22) gespeichert sind, an das Zielendgerät, wenn das Zielendgerät sich in dem Videophonemodus befindet und die Kamera (11) inaktiv ist.

6. Funkmobilendgerät nach Anspruch 5, **dadurch gekennzeichnet, dass** das Funkmobilendgerät betreibbar ist, zu den Videophonekommunikationsdiensten von den Pseudo-Videophonekommunikationsdiensten zu wechseln, oder von dem Bildempfang, wenn die zweite Entscheidungseinheit (20) detektiert, dass die Kamera (11) angebracht ist.

## Revendications

1. Terminal de radiotéléphonie permettant de communiquer des données comportant des sons et des images avec un terminal de destination, le terminal de radiotéléphonie comportant :
une unité de stockage (22) agencée pour mémoriser des données d'image pour une transmission vers le terminal de destination, dans laquelle les données d'image sont mémorisées selon un format codé dans l'unité de stockage (22) ;
une unité de connexion (21) pouvant être connectée à une caméra (11) ;
un détecteur de déconnexion (20) agencé pour détecter si la caméra (11) est démontée ou montée par l'intermédiaire de l'unité de connexion (21), et transmettre un signal de détection à un contrôleur (5) ; et
un transmetteur (17) agencé pour transmettre des données d'image mémorisées dans l'unité de stockage (22) vers le terminal de destination ;
dans lequel le contrôleur (5) est agencé pour contrôler si un mode vidéophone du terminal de radiotéléphonie est actif lorsqu'un appel entrant est reçu depuis le terminal de destination ;
le contrôleur (5) est agencé pour contrôler si la caméra (11) est active ;
les états inactifs de la caméra comprennent des cas où la caméra n'est pas montée ou lorsque la caméra est montée mais ne fonctionne pas ; et
le terminal de radiotéléphonie peut être contrôlé pour délivrer des services de communication vocale lorsqu'il n'est pas en mode vidéophone, délivrer des services de communication vidéophone lorsque la caméra (11) est active en mode vidéophone du terminal de radiotéléphonie, ou délivrer des services de communication pseudo-vidéophone en transmettant, grâce au transmetteur, des données d'image mémorisées dans l'unité de stockage (22) vers le terminal de destination lorsque la caméra (11) est inactive en mode vidéophone.

2. Terminal de radiotéléphonie selon la revendication 1, dans lequel l'unité de stockage (22) est agencée pour mémoriser des données d'image selon un format approprié pour une transmission vers le terminal de destination.

3. Terminal de radiotéléphonie selon la revendication 1, **caractérisé en ce que** le terminal de radiotéléphonie permet de commuter en services de communication vidéophone à partir des services de communication pseudo-vidéophone ou à partir de la réception d'images, lorsque la seconde unité de décision (20) détecte que la caméra (11) est montée.

4. Terminal de radiotéléphonie selon la revendication 3, **caractérisé en ce que** le terminal de radiotéléphonie permet de délivrer des services de communication vocale en mode de transmission vocale qui transmet des données vocales au terminal de destination et dans un mode de réception vocale qui reçoit des données vocales depuis le terminal de destination, et dans lequel des premières données d'image indiquant qu'un utilisateur du terminal de radiotéléphonie est en train de parler sont agencées pour être transmises au terminal de destination dans le mode de transmission vocale, et des secondes données d'image indiquant que l'utilisateur n'est pas en train de parler sont agencées pour être transmises au terminal de destination en mode de réception vocale.

5. Terminal de radiotéléphonie permettant de communiquer des données comprenant des sons et des images avec un terminal de destination, le terminal de radiotéléphonie comportant :
une unité de stockage (22) agencée pour mémoriser des données d'image pour une transmission vers le terminal de destination, dans laquelle les données d'image sont mémorisées selon un format codé dans l'unité de stockage (22) ;
une unité de connexion (21) pouvant être connectée à une caméra (11) ;
un détecteur de déconnexion (20) agencé pour détecter si la caméra (11) est détachée ou montée par l'intermédiaire de l'unité de connexion (21), et transmettre un signal de détection à un contrôleur (5) ; et
un transmetteur (17) agencé pour transmettre des données d'image mémorisées dans l'unité de stockage (22) au terminal de destination ;
dans lequel le contrôleur (5) est agencé pour contrôler si le terminal de destination se trouve en mode vidéophone lorsqu'un appel est effectué depuis le terminal de destination ;
le contrôleur (5) est agencé pour contrôler si la caméra (11) est active ;
les états inactifs de la caméra comprennent des cas où la caméra n'est pas montée ou lorsque la caméra est montée mais ne fonctionne pas ; et
le terminal de radiotéléphonie peut être contrôlé pour délivrer des services de communication vocale lorsque le terminal de destination n'est pas en mode vidéophone, délivrer des services de communication vidéophone lorsque le terminal de destination se trouve en mode vidéophone et la caméra (11) est active, ou délivrer des services de communication pseudo-vidéophone en transmettant, grâce au transmetteur, des données d'image mémorisées dans l'unité de stockage (22) vers le terminal de destination lorsque le terminal de destination se trouve en mode vidéophone et que la caméra (11) est inactive.

6. Terminal de radiotéléphonie selon la revendication 5, **caractérisé en ce que** le terminal de radiotéléphonie permet de commuter en services de communication vidéophone à partir des services de communication pseudo-vidéophone ou à partir de la réception d'images, lorsque la seconde unité de décision (20) détecte que la caméra (11) est montée.
